# FASCICULE DE BREVET EUROPEEN

(11) **EP 1 618 014 B1**
(45) Date de publication et mention de la délivrance du brevet: **11.06.2008**
(21) Numéro de dépôt: 04742552.5
(22) Date de dépôt: 20.04.2004
(51) Int. Cl.: B60J 7/14, B60J 7/20

(54) **TOIT ESCAMOTABLE DE VEHICULE**
ÖFFNUNGSFÄHIGES FAHRZEUGDACH
RETRACTABLE VEHICLE-ROOF

(30) Priorité: 29.04.2003 FR 0305249
(43) Date de publication de la demande: 25.01.2006
(73) Titulaire: SEBA, 75011 Paris (FR)
(72) Inventeur: QUEVEAU, Gerard, F-79140 Le Pin (FR); QUEVEAU, Paul, F-79140 Montravers (FR); GUILLEZ, Jean-Marc, F-79140 Ciriéres (FR)
(74) Mandataire: Breese, Pierre
(86) Numéro de dépôt international: PCT/FR2004/000975
(87) Numéro de publication internationale: WO 2004/096592

(56) Documents cités:
- DE-A- 10 011 971
- DE-C- 19 959 317
- FR-A- 2 791 007
- US-A1- 2001 042 992
- US-B1- 6 312 041

## Description

La présente invention concerne un toit escamotable de véhicule, et plus particulièrement un tel toit comprenant plusieurs éléments de toit rigides déplaçables entre une position dans laquelle ils recouvrent l'habitacle du véhicule et une position dans laquelle ils sont rangés dans le coffre arrière du véhicule.

On connaît de tels toits escamotables permettant de transformer un véhicule du type berline ou coupé en un véhicule du type cabriolet, voir par exemple US-B-6 312 041.

L'un des problèmes à résoudre lors de la conception de tels toits est de ne pas trop diminuer le volume du coffre arrière lorsque les éléments de toit sont rangés.

A cet effet, l'invention a pour objet un toit escamotable de véhicule, comprenant plusieurs éléments de toit rigides déplaçables entre une position dans laquelle ils recouvrent l'habitacle du véhicule et une position dans laquelle ils sont rangés dans le coffre arrière du véhicule, le toit comprenant :
- au moins un élément de toit central arrière et un élément de toit central avant ;
- un élément de toit latéral arrière gauche, un élément de toit latéral avant gauche, un élément de toit latéral arrière droit, et un élément de toit latéral avant droit ;
- l'élément de toit central arrière étant articulé sur le châssis du véhicule autour d'un premier axe transversal, le bord arrière de l'élément de toit central avant étant articulé sous le bord avant de l'élément de toit central arrière autour d'un deuxième axe transversal ;
- l'élément de toit latéral de toit arrière gauche, et respectivement droit, étant articulé sur le châssis du véhicule autour d'un troisième, respectivement quatrième, axe transversal et le bord arrière de l'élément de toit latéral avant gauche, respectivement droit, étant articulé sur le bord avant de l'élément de toit latéral arrière gauche, respectivement droit, autour d'un cinquième, respectivement sixième, axe transversal.

On désolidarise ainsi les éléments de toit centraux des éléments de toit latéraux, et on positionne les éléments de toit latéraux de manière qu'ils viennent sur les bords latéraux du coffre arrière.

On entend ici par axe « transversal » un axe sensiblement perpendiculaire au plan de symétrie du véhicule.

Dans un mode de réalisation particulier, le toit escamotable selon l'invention comprend des moyens pour décaler vers l'extérieur l'élément de toit central arrière gauche, respectivement droit, lors de sa rotation autour dudit troisième, respectivement quatrième, axe transversal.

On permet ainsi le passage des éléments latéraux de chaque côté des sièges arrière lors de leur rangement dans le coffre arrière.

Plus particulièrement, lesdits moyens peuvent comprendre un organe fileté solidaire dudit élément de toit latéral arrière gauche, respectivement droit, agencé pour coopérer avec un filetage complémentaire dudit troisième, respectivement quatrième, axe transversal.

On observera que les filetages complémentaires précités peuvent se réduire à une simple rainure hélicoïdale dans laquelle est engagé un doigt suiveur.

On décrira maintenant, à titre d'exemple non limitatif, un mode de réalisation particulier de l'invention, en référence aux dessins schématiques annexés dans lesquels :
- la figure 1 est une vue de côté d'une partie d'un véhicule muni d'un toit selon l'invention, avec le toit en position fermée ;
- les figures 2, 3 et 4 illustrent le repliement de ce toit dans le coffre arrière du véhicule ;
- la figure 5 montre le toit rangé dans le coffre arrière du véhicule ; et
- la figure 6 illustre un mécanisme particulier de l'invention.

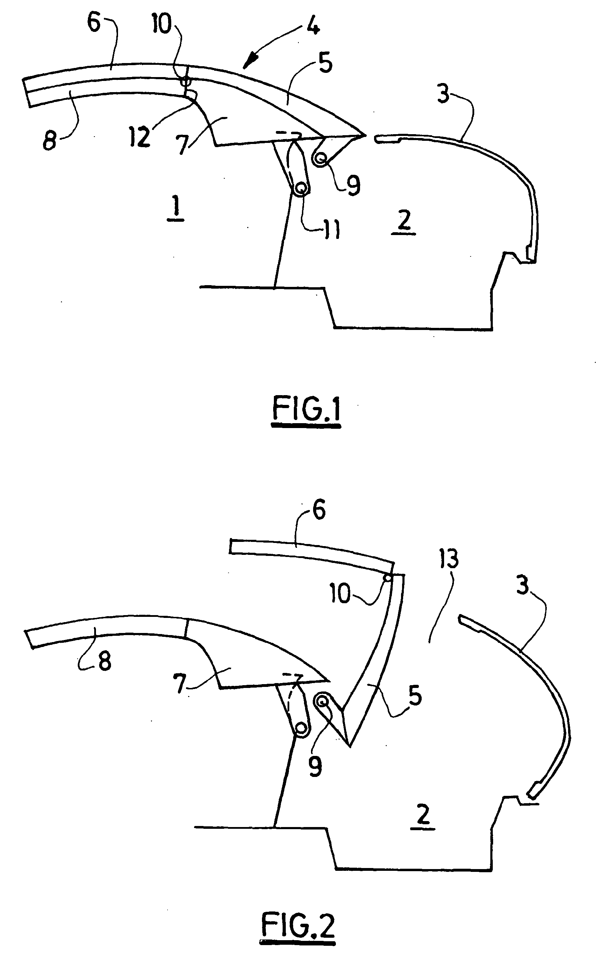

On voit à la figure 1 la partie arrière d'un véhicule automobile avec son habitacle 1 et son coffre arrière 2. Le coffre arrière 2 est fermé par un couvercle 3 susceptible de s'ouvrir soit de l'avant vers l'arrière (figures 2, 3 et 4) pour le rangement dans le coffre du toit 4 du véhicule, soit de façon traditionnelle, de l'arrière vers l'avant, pour le rangement des bagages dans le coffre.

Le toit 4 est composé d'un élément central arrière 5, d'un élément central avant 6, de deux éléments latéraux arrière 7 et de deux élément latéraux avant 8.

L'élément central arrière 5 est articulé sur le châssis dans sa zone arrière autour d'un axe transversal 9. L'élément central avant 6 a son bord arrière articulé au bord avant de l'élément central arrière 5 autour d'un axe transversal 10.

Chacun des éléments latéraux arrière 7 est articulé sur le châssis autour d'un axe transversal fixe 11. Le bord arrière de chacun des éléments latéraux avant 8 est articulé au bord avant de l'élément latéral arrière 7 respectif autour d'un axe transversal 12.

Dans la figure 1, les éléments de toit 5-8 sont dépliés au-dessus de l'habitacle 1 qu'ils recouvrent. Le véhicule est alors en configuration de berline ou de coupé.

Dans la figure 2, le couvercle 3 du coffre 2 est basculé vers l'arrière, de manière à ouvrir un passage 13 pour les éléments de toit. Des moyens connus, non représentés, entraînent le pivotement de l'élément central arrière 5 autour de l'axe 9 et le pivotement de l'élément central avant 6 autour de l'axe 10. Lors de ce mouvement, les éléments latéraux 7 et 8 restent fixes.

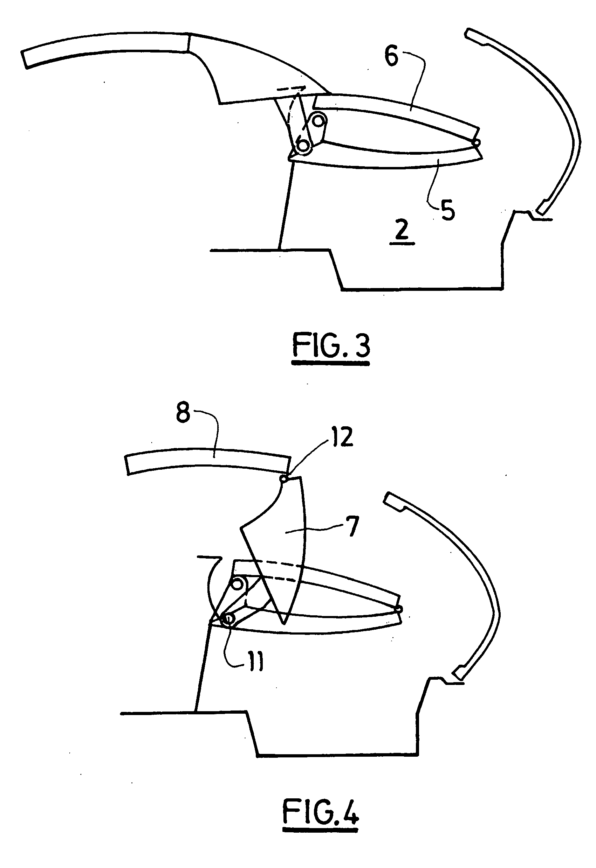

Le mouvement des éléments centraux 5 et 6 se poursuit jusqu'à la configuration de la figure 3 où ces éléments sont rangés sensiblement horizontalement l'un au-dessus de l'autre dans le coffre arrière 2.

Des moyens connus, non représentés, entraînent alors la rotation des éléments latéraux arrière 7 autour des axes 11 et des éléments latéraux avant 8 autour des axes 12.

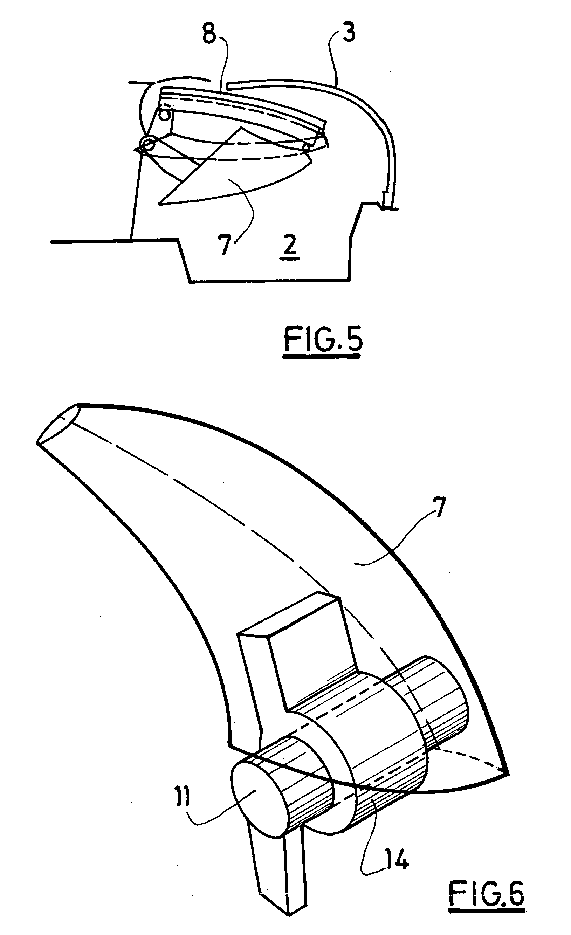

Si on se réfère à la figure 6, on voit que chacun des éléments latéraux arrière 7 est solidaire d'une pièce 14 engagée sur l'arbre 11 solidaire du châssis du véhicule. La pièce 14 est filetée intérieurement tandis que l'axe 11 est fileté extérieurement. Ainsi, lors de la rotation des éléments de toit 7 autour de l'axe 11, ils sont entraînés vers l'extérieur de manière à être décalés par rapport à leur position d'origine. Ce mouvement permet ainsi le passage des éléments latéraux 7 et 8 de chaque côté des sièges arrière du véhicule et de chaque côté des éléments centraux qui sont déjà rangés dans le coffre.

Lorsque ces mouvements de rotation et de translation sont terminés, les éléments latéraux 7 et 8 sont rangés sensiblement horizontalement sur les bords latéraux du coffre arrière 2 dont le couvercle 3 peut alors être refermé. Le véhicule se trouve alors en configuration de cabriolet.

On peut également laisser les éléments latéraux en place sur l'habitacle du véhicule et être ainsi en configuration "toit ouvert".

Le retour en configuration berline ou coupé s'effectue par les mouvements inverses de ceux qui viennent d'être décrits.

La disposition selon l'invention permet d'augmenter d'une part la hauteur de passage des bagages dans le coffre, et d'autre part la hauteur de rangement.

## Revendications

1. - Toit escamotable de véhicule, comprenant plusieurs éléments de toit rigides déplaçables entre une position dans laquelle ils recouvrent l'habitacle (1) du véhicule et une position dans laquelle ils sont rangés dans le coffre arrière (2) du véhicule, **caractérisé par le fait qu'**il comprend :
- au moins un élément de toit central arrière (5) et un élément de toit central avant (6) ;
- un élément de toit latéral arrière gauche (7), un élément de toit latéral avant gauche (8), un élément de toit latéral arrière droit, et un élément de toit latéral avant droit ;
- l'élément de toit central arrière étant articulé sur le châssis du véhicule autour d'un premier axe transversal (9) et le bord arrière de l'élément de toit central avant étant articulé sur le bord avant de l'élément de toit central arrière autour d'un deuxième axe transversal (10) ;
- l'élément de toit latéral arrière gauche, respectivement droit, étant articulé sur le châssis du véhicule autour d'un troisième, respectivement quatrième, axe transversal (11) et le bord arrière de l'élément de toit latéral avant gauche, respectivement droit, étant articulé sur le bord avant de l'élément de toit latéral arrière gauche, respectivement droit, autour d'un cinquième, respectivement sixième, axe transversal (12).

2. - Toit escamotable selon la revendication 1, comprenant des moyens (11, 14) pour décaler vers l'extérieur l'élément de toit latéral arrière gauche, respectivement droit, lors de sa rotation autour dudit troisième, respectivement quatrième, axe transversal.

3. - Toit escamotable selon la revendication 2, dans lequel lesdits moyens comprennent un organe fileté (14) solidaire dudit élément de toit latéral arrière gauche, respectivement droit, agencé pour coopérer avec un filetage complémentaire dudit troisième, respectivement quatrième, axe transversal (11).

## Claims

1. A convertible roof for a vehicle, comprising several hard top elements movable from a position where they cover the passenger compartment (1) of the vehicle to a position where they are folded in the rear trunk (2) of the vehicle, **characterized in that** it comprises:
- at least a rear central roof element (5) and a front central roof element (6);
- a left rear side roof element (7), a left front side roof element (8), a right rear side roof element, and a right front side roof element;
- the rear central roof element being hinged on the vehicle chassis about a first transversal axis (9) and the rear edge of the front central roof element being hinged on the front edge of the rear central roof element about a second transversal axis (10);
- the left, respectively right, rear side roof element being hinged on the vehicle chassis about a third, respectively fourth transversal axis (11) and the rear edge of the left, respectively right, front side roof element being hinged on the front edge of the left, respectively right, rear side roof element about a fifth, respectively sixth, transversal axis (12).

2. A convertible roof according to claim 1, comprising means (11, 14) for shifting outwards the left, respectively right, rear side roof element, upon its rotation about said third, respectively fourth, transversal axis.

3. A convertible roof according to claim 2, wherein said means include a threaded member (14) integral with said left, respectively right, rear side roof element, so arranged as to cooperate with a thread complementary to the third, respectively fourth, transversal axis (11).

## Patentansprüche

1. Einklappbares Fahrzeugdach mit mehreren starren Dachteilen, die zwischen einer Position beweglich sind, in der sie den Innenraum (1) des Fahrzeugs abdecken, und einer Position, in der sie im Kofferraum (2) des Fahrzeugs verstaut sind, **dadurch gekennzeichnet, dass** es aus folgenden Teilen besteht:
- mindestens einem hinteren mittleren Dachteil (5) und einem vorderen mittleren Dachteil (6);
- einem linken hinteren seitlichen Dachteil (7), einen linken vorderen seitlichen Dachteil (8), einem rechten hinteren seitlichen Dachteil und einem rechten vorderen seitlichen Dachteil;
- wobei das hintere mittlere Dachteil um eine erste Querachse (9) herum am Chassis des Fahrzeugs angelenkt ist und der hintere Rand des vorderen mittleren Dachteils um eine zweite Querachse (10) herum am vorderen Rand des hinteren mittleren Dachteils angelenkt ist;
- wobei das linke bzw. rechte hintere seitliche Dachteil um eine dritte bzw. vierte Querachse (11) herum am Chassis des Fahrzeugs angelenkt ist und der hintere Rand des linken bzw. rechten vorderen seitlichen Dachteils um eine fünfte bzw. sechste Querachse (12) herum am vorderen Rand des linken bzw. rechten hinteren seitlichen Dachteils angelenkt ist.

2. Einklappbares Dach gemäß Anspruch 1, mit Mitteln (11, 14), um das linke bzw. rechte hintere seitliche Dachteil bei seiner Drehung um die genannte dritte bzw. vierte Querachse herum nach außen zu verschieben.

3. Einklappbares Dach gemäß Anspruch 2, bei dem die genannten Mittel ein Gewindeorgan (14) umfassen, das mit dem linken bzw. rechten hinteren seitlichen Dachteil fest verbunden und vorgesehen ist, um mit einem entsprechenden Gewinde der genannten dritten bzw. vierten Querachse (11) zusammenzuwirken.
